(19) Europäisches Patentamt
European Patent Office
Office européen des brevets

(11) Publication number: 0 015 664
A1

# (12) EUROPEAN PATENT APPLICATION

(21) Application number: **80300415.9**

(22) Date of filing: **13.02.80**

(51) Int. Cl.³: **C 21 B 3/06**

(30) Priority: **20.02.79 GB 7905943**

(43) Date of publication of application: **17.09.80**
**Bulletin 80/19**

(84) Designated Contracting States: **AT BE CH DE FR IT LU NL SE**

(71) Applicant: **BEREMET S.A., 9 Scheepzatestraat, Gent 9000 (BE)**
Applicant: **SIDMAR S.A., 51 Kennedy Laan, Gent 9020 (BE)**

(72) Inventor: **Lahr, Raymond H., Dr., "Firbank", Castleton/Whitby North Yorkshire (GB)**
Inventor: **Sabatier, Pierre, 19 Maenhoutstraat, B-9830 Sint Martens Latern Gent (BE)**
Inventor: **Kuntziger, Ernest, 64 Bayanx Laan, B-8300 Knokke (BE)**

(74) Representative: **Evans, David Charles et al, F.J. CLEVELAND & COMPANY 40-43, Chancery Lane, London, WC2A 1JQ (GB)**

## (54) Improvements in and relating to the treatment of metallurgical slags.

(57) A slag treatment process which comprises introducing molten slag into a slagging pit adding a finely divided material capable of producing reducing conditions within the slagging pit said finely divided material being added in the form of an aqueous slurry and thereafter allowing the reactions so initiated to proceed to completion.

EP 0 015 664 A1

DESCRIPTION

The present invention relates to a treatment of metallurgical slags, and has particular reference to treatment of steelworks liquid slag to obtain better physical and chemical properties with a view to recycling them in sinter and blast furnace plants or utilizing them for other purposes with less subsequent processing.

In modern integrated iron and steel works, steelmaking slags are transported in liquid form in slag ladles to specially constructed pits outside the steel plant, where they are tipped and cooled by water sprays. After solidification, they are excavated and then passed through slag handling plants where the metallic materials are removed using a series of magnetic separators and screens. Further processing is carried out by passing the slags through various types of crushers and screens. As processed steel slags are still high in iron, lime and manganese, the 0 to 8 mm grain size of steelworks slags is recycled in the blast furnaces via the sinterplant and partially replaces more expensive fluxes. In BOS steelmaking the percentage of

slag that can be recycled in this manner depends on the maximum phosphorous content permissable in the hot metal. Most steelpants demand a phosphorous content not exceeding 0.2%. The remaining slag material of larger sizes are available for various other uses, particularly in highway construction.

In an integrated iron and steel works the dust laden gases from the blast furnaces and BOS furnaces are frequently cleaned in the last instance by water sprays, in order to remove the fine particles and thus enable the further utilization of the gases.

The waters carrying the fine particles or slurry are conducted to settling basins. In due course the fine particles coagulate into thickened solids or a black mud-like substance very high in water content. These ponds have to be emptied from time to time to continue their usage.

At the present time, these products can only be used in sinterplant mixes, if they are previously treated in a drying plant. The fineness of the product, however, greatly reduces the productivity of the sinterplant, and furthermore, the drying plant should include a roasting operation by the addition of carbon in order to pass the undesirable volatile alkali and zinc element into the gaseous phase. Such plant requires a considerable capital investment and consumes considerable amount of energy.

According to the present invention, there is provided a slag treatment process which comprises introducing molten slag and a finely divided material capable of producing reducing conditions into a slagging pit, said finely divided material being added in the form of an aqueous slurry and thereafter allowing the reactions so initiated to proceed to completion.

The finely divided material may include carbon which may be included with the finely divided material or added separately.

By finely divided material is to be understood a material of average grain size of 0.2 mm or less.

In a preferred embodiment of the present invention, the composition is a steelworks mud obtained in the manner described above. Typical blast furnace gas particles have a grain size of 75 to 250 $\mu$ while 80% of steelworks particles have a grain size of less than 1 $\mu$. In the practice of the present invention, the latent heat of the liquid slag and the carbon content of the steelworks mud are employed together to obtain desirable reactions. If the muds are devoid of carbon it is possible to add other carbon containing products or carbon per se in order to provide the carbon necessary to effect the desirable inter-reaction.

The mud may be spread or sprayed onto freshly layered dumped BOS slag, or the liquid slag may be poured onto a layer of mud previously deposited in the slag pit. The operation may be repeated many times over before the entire mixture is excavated.

Instead of admixing mud with liquid slag, the former can consist of very fine iron ores, iron ore carbonates or other materials which benefit from a presintering treatment. As indicated above, the carbon content may be part of the composition or may be added separately from the composition or a mixture of both. The composition added may have up to 50% of moisture and the process of the present invention can still be operated successfully.

In accordance with the present invention, the latent heat of the molten slag has the effect that elements which are volatile at low temperatures such as alkalis and zinc, and which are highly undesirable in the blast furnace burden, are partially eliminated in the gaseous phase.

Visual observations and laboratory examinations confirm the occurrences of these gaseous reactions.

The resulting slag product is of a porous nature and is very suitable for use in the sinter process and may indeed enhance the productivity of the sinter process.

Hitherto, the biggest drawback in the utilization of BOS slags as roadstone or other applications is the presence of free lime and magnesia. Weathering of steelwork slags for a period of up to 9 months is the generally accepted method for reducing free lime contents. Reduction of the free lime contents is seriously retarded by the density of BOS slags. The invention covers the treatment of BOS slags in slag pits by carbonaceous shales rich in silica and carbon or other products of similar constituents giving the same results.

This treatment not only reduces the free lime and free magnesia contents of the slags by obtaining more stable compounds, but also gives rise to a more porous slag, which greatly facilitates the weathering actions.

Steelmaking slags contain free and combined lime. The annual natural losses of calcium from the soil is of a very high order and in the region of 375 - 499 kg per hectare. Slag does not burn like ordinary agricultral lime nor reverts to carbonate, but remains in the stable form. Due to the low $P_2O_5$ contents of BOS slags, which are in the region of 5% the commercial value of the product is greatly inferior to basic Bessemer or LDAC slags.

The invention also covers the addition of phosphorus containing products in the slag pits to increase the $P_2O_5$ content. If carbon is added, a more porous product is obtained, which greatly reduces the high crushing and grinding costs.

In the specific embodiment of the present invention the excavated thickened solids or mud from the settling basins are stocked for some time to allow the surplus waters to drain away.

The material may then be sprayed onto the molten slag, but the moisture content may still be of the order of up to 50%.

Mixing liquid slag with thickened solids or muds containing a high percentage of water is a very delicate operation and considerable care needs to be exercised to ensure that explosions do not occur.

Two methods of mixing the products have been employed, and these are set out in the following specific examples, which are given by way of example only, of methods of carrying the invention into effect:-

EXAMPLE NO. 1 (Spreading after dumping in liquid slag)

Several tones of thickened solids or muds containing a high percentage of water are spread on the slag bed, shortly after the liquid slag has been dumped. At first vaporisation of the water takes place, then the carbon effects a direct reduction with the iron oxides in the following manner:-

I. $Fe_2O_3 + C = 2Fe + 3CO$

II. $3 Fe_2O_3 + C = 2 Fe_3O_4 + CO$

III. $Fe_3O_4 + 4 C = 3 Fe + 4 CO$

IV. $Fe_3O_4 + C = 3 FeO + CO$

The above reactions with the carbon as a reducing agent are endothermic and require a lot of heat. The reactions begin slowly at 700°c. but are greatly accelerated above 1000°c. To enable some of the reactions to proceed, it is necessary to provide a thick layer of red hot slag. This can be achieved by dividing the slag pits into compartments where the available heat capacity can be carefully controlled.

EXAMPLE NO. 2 (Spreading before dumping the slag)

If the carbon content of the products to be treated is insufficient, it is necessary to add a product rich in carbon and mix or cover it with the thickened solids or muds. The liquid slag can be poured over this mixture. The carbon reacts immediately and creates a violent agitation of the whole mass and perfect mixing of all the components is achieved. Carbon monoxide is formed which reacts with the iron oxides. This indirect reduction of the iron oxides has the great advantage that it takes place at much lower temperatures (400°C. to 1000°C) than the direct reduction.

The reactions which are given below are slightly exothermic:-

I. $Fe_2 O_3 + 3 CO = 2 Fe + 3 CO_2$

II. $3 Fe_2 O_3 + CO = 2 Fe_3 O_4 + CO_2$

III. $Fe_3 O_4 + 4 CO = 3 Fe + 4 CO_2$

IV. $FeO + CO = Fe + CO_2$

It is obvious that the carbon content of the mixture largely determines the end results. In a reducing atmosphere metalisation of the iron oxides takes place at temperatures in the region of 1050°C but also zinc and lead volatilize at these temperatures. The alkalis behave in a similar manner.

The chemical analysis of the muds or thickened solids reveal the presence of undesired elements which are:-

S : 0.30 - 0.50%
Pb : 0.20 - 0.30%
Zn : 0.40 - 0.45%
$Na_2O$ : 0.40 - 0.50%
$K_2O$ : 0.08%

Some of these elements are very harmful to blast furnace refractories and must be eliminated as far as possible. On the other hand, the thickened solids in the dry state contain approximately 50%Fe, 15%CaO and 2%MnO.

At deep red temperature, zinc burns with a bright green flame giving ZnO. We have been able to observe the bright green flame of Zn in the slag pits together with the distinctive coloured flames of other volatile elements.

Chemical analyses have confirmed the visual observations showing an appreciable reduction in the undesired elements. Furthermore, X-ray analyses have revealed the formation of a new compound $Ca\ Fe_4\ O_7$, which is highly sought in the sinter process due to its excellent mechanical strength.

It must be stressed that the presence of carbon in the mixture encourages the formation of gases, resulting in a very porous slag, which greatly facilitates its further treatment.

Very fine iron ores (pellet feed) below 0.2 mm which causes difficulties in the sinter mix due to their extreme fineness have been mixed with the liquid slag in a similar manner to that described above.

Some iron ore particles have been absorbed by the slag but others have agglomerated into strong pellets which could be used without difficulty in the sinter plants. Some pellets even exceeded 6 mm in size and could be charged directly into the blast furnace thereby by-passing the sinter plant.

CLAIMS:-

1. A slag treatment process which comprises introducing molten slag and a finely divided material capable of producing reducing conditions into a slagging pit, said finely divided material being added in the form of an aqueous slurry and thereafter allowing the reactions so initiated to proceed to completion.

2. A process as claimed in claim 1 wherein the finely divided material includes carbon.

3. A process as claimed in claim 1 or claim 2 wherein the finely divided material is a steelworks mud.

4. A process as claimed in claim 1 wherein the finely divided material includes steelworks mud and added carbon.

5. A process as claimed in any preceeding claim wherein the carbonaceous content of the finely divided material is added separately from other fines and metallurgical content of the finely divided material.

6. A process as claimed in any preceeding claim wherein the finely divided material may include up to 50% of water.

7. A process as claimed in any preceeding claim wherein a cycle of slagging operations is repeated a number of times and thereafter the resulting slag product is broken up and removed to allow the process to be repeated.

8. A process as claimed in claim 1 and substantially as described in the specific examples hereinfore set forth.

European Patent Office

# EUROPEAN SEARCH REPORT

0015664

Application number

EP 80 30 0415

| Category | DOCUMENTS CONSIDERED TO BE RELEVANT<br>Citation of document with indication, where appropriate, of relevant passages | Relevant to claim | CLASSIFICATION OF THE APPLICATION (Int. Cl. 3) |
|---|---|---|---|
| X | US - A - 3 823 010 (G.S. TOBIAS)<br>* Claims 1,8; page 1 *<br>-- | 1,2,6,8 | C 21 B 3/06 |
|  | US - A - 3 758 292 (J.B. KUNTZ)<br>* Claim 1 *<br>-- | 1,2,8 |  |
|  | DE - C - 332 628 (F. ECKERT)<br>* Claims 1,2 *<br>-- | 1,3,8 | TECHNICAL FIELDS SEARCHED (Int.Cl. 3) |
|  | DE - B - 1 161 201 (RHEINSTAHL HUTTENWERKE)<br>* Claims 1,2 *<br>-- | 1,3,8 | C 21 B 3/06<br>3/08<br>3/04<br>C 04 B 5/04<br>5/02 |
|  | DE - C - 767 717 (HOESCH)<br>* Claim; page 2, lines 15-17; 31-35 *<br>-- | 1,2,8 |  |
|  | FR - A - 936 247 (F. PAPIER)<br>* Claims 1,2; page 1, right-hand column, lines 11,20 *<br>-- | 1,8 | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
|  | BE - A - 848 077 (C.R.M.)<br>* Claims 1,3 *<br>-- | 1,2,5,8 |  |
|  | FR - A - 2 172 206 (GRÄNGES AKTIEBOLAG)<br>* Claims 1,6 *<br>--<br>./. |  1,2,5,8 | &: member of the same patent family, corresponding document |

X The present search report has been drawn up for all claims

| Place of search | Date of completion of the search | Examiner |
|---|---|---|
| The Hague | 30-05-1980 | ELSEN |

European Patent Office

# EUROPEAN SEARCH REPORT

Application number
EP 80 30 0415
-2-

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | FR - A - 2 397 373 (SACILOR-ACIERIES ET LAMINOIRS DE LORRAINE)<br>* Claims 1,6,7 *<br>---- | 1,7,8 | |
| | | | TECHNICAL FIELDS SEARCHED (Int. Cl. 3) |